# EUROPÄISCHE PATENTSCHRIFT

(11) **EP 4 045 214 B1**
(45) Veröffentlichungstag und Bekanntmachung des Hinweises auf die Patenterteilung: **16.08.2023**
(21) Anmeldenummer: 20781389.0
(22) Anmeldetag: 06.10.2020
(51) Int. Cl.: B23D 57/00

(54) **SEILSÄGE FÜR EIN ENDLOSSEIL**
CABLE SAW FOR AN ENDLESS CABLE
SCIE À CÂBLE POUR UN CÂBLE SANS FIN

(30) Priorität: 16.10.2019 EP 19203461
(43) Veröffentlichungstag der Anmeldung: 24.08.2022
(73) Patentinhaber: HILTI Aktiengesellschaft, 9494 Schaan (LI)
(72) Erfinder: RIEGER, Hans-Joerg, 6712 Thueringen (AT); PLATTNER, David, 6130 Schwaz (AT)
(74) Vertreter: Hilti Aktiengesellschaft Corporate Intellectual Property
(86) Internationale Anmeldenummer: PCT/EP2020/077946
(87) Internationale Veröffentlichungsnummer: WO 2021/073943

(56) Entgegenhaltungen:
- DE-A1-102005 037 542
- DE-U1- 29 805 528
- DE-U1- 29 821 386

## Beschreibung

### GEBIET DER ERFINDUNG

Die vorliegende Erfindung betrifft eine Seilsäge gemäß dem Oberbegriff des Patentanspruchs 1. Eine derartige Seilsäge geht beispielsweise aus der DE 298 21 386 U1 hervor.

### OFFENBARUNG DER ERFINDUNG

Die erfindungsgemäße Seilsäge für ein endloses Sägeseil ist in Anspruch 1 definiert. Sie hat ein Gehäuse, einen Seilantrieb, und einen Seilspeicher. Der Seilantrieb ist zum Ziehen des Sägeseils in einer Umlaufrichtung. Der Seilspeicher hat ein erstes Paket von Umlenkrollen und ein zweites Paket von Umlenkrollen. Das zweite Paket ist gegenüber dem ersten Paket zum Erhöhen einer Länge des auf dem Seilspeicher gespeicherten Sägeseils längs einer Richtung verschiebbar gelagert. Eine Vorschubeinrichtung ist auf das zweite Paket eine Vorschubkraft in die Richtung ausübend. Der Seilspeicher ist in der Umlaufrichtung nach dem Seilantrieb angeordnet. Die Seilsäge zieht das Sägeseil in der Umlaufrichtung, wodurch sich eine Zugspannung auf das in die Seilsäge einlaufende Sägeseil ergibt. Das aus der Seilsäge auslaufende Sägeseil ist hingegen weitgehend ohne Spannung. Die relative Anordnung von Seilantrieb und Seilspeicher ermöglicht, ein Spannen des auslaufenden Sägeseils durch den Seilspeicher. Eine Ausgestaltung der Seilsäge sieht vor, dass die Vorschubeinrichtung pneumatisch ausgebildet ist oder über eine mechanische Feder die Vorschubkraft auf das zweite Paket ausübend ist. Die pneumatische oder federnde Einleitung der Vorschubkraft erweist sich als vorteilhaft, um die Lebensdauer des Sägeseils gegenüber der aufgrund von Inhomogenitäten des zu sägenden Bauelements schnell und stark variierenden Seilspannung zu schützen. Eine Ausgestaltung sieht vor, dass der Seilantrieb ein oder mehrere Motoren aufweist. Die Motoren sind mit der einen oder den mehreren Antriebsrollen zum Ziehen des Sägeseils in einer Umlaufrichtung gekoppelt. Der Seilantrieb zeichnet sich durch die angetriebenen Rollen aus, im Gegensatz zu den freilaufenden Rollen, z.B. des Seilspeichers. Die Umlenkrollen des Seilspeichers sind vorzugsweise frei laufend, d.h. weder angetrieben noch gebremst. Ausgestaltungen der Seilsäge sehen einen an dem Gehäuse vorgesehenen Seilauslass zum Ausgeben des Sägeseils vor. Der Seilspeicher ist zwischen der wenigstens einen Antriebsrolle und dem Seilauslass angeordnet. Das endlose Sägeseil kann von dem Seilauslass unmittelbar zu dem Seilantrieb geführt sein, insbesondere kann das Sägeseil geradlinig von dem Seilspeicher zu dem Seilauslass geführt sein. Der Seilspeicher kann das auslaufende Sägeseil möglichst ohne Reibungsverluste oder ähnliche Verluste eine Spannkraft ausüben. Ausgestaltungen der Seilsäge sehen einen an dem Gehäuse vorgesehenen Seileinlass zum Einziehen des Sägeseils in das Gehäuse vor. Der Seilantrieb ist zwischen dem Seileinlass und dem Seilspeicher angeordnet. Das endlose Sägeseil kann von dem Seileinlass unmittelbar zu dem Seilantrieb geführt sein, insbesondere kann das endlose Sägeseil von dem Seileinlass geradlinig zu dem Seilantrieb geführt sein.

Eine Umlenkrolle für ein Umlenkrollenpaket einer Seilsäge hat ein Rad, ein Drehlager und ein Dichtelement. Das Rad hat entlang seines Umfangs eine Laufrille zum Führen eines Sägeseils der Seilsäge. Das Drehlager ist koaxial in das Rad eingesetzt. Eine äußere Hülse steht von einer Seitenfläche des Rades vor. Eine innere Hülse steht von einer der einen Seitenfläche gegenüberliegenden Seitenfläche vor. Ein Radius der inneren Hülse ist kleiner als ein Radius der äußeren Hülse. Das Dichtelement ist auf die äußere Hülse aufgesetzt oder in die innere Hülse eingesetzt.

Die Umlenkrollen sind hohen Belastungen ausgesetzt. Die einzelnen Umlenkrollen müssen ihre Drehzahl unabhängig voneinander der Laufgeschwindigkeit des Sägeseils anpassen, ansonsten werden sie in kürzester Zeit zerschnitten. Die Drehlager müssen aus dem gleichen Grund sehr leichtläufig sein. Staub und Wasser setzen den Drehlagern zu. Eine gute Abdichtung ist daher unbedingt notwendig. Die konzeptionell einfachste Abdichtung dichtet jedes Drehlager einzeln ab. Hierdurch ist eine gute Abdichtung und zugleich eine vollständige Unabhängigkeit der Umlenkrollen gewährleistet. Allerdings berührt das Dichtelement in diesem Fall sowohl stehende und rotierende Element, z.B. eine Achse und die Umlenkrolle.

Die hohe Drehzahl bedingt einen Verschleiß des Dichtelements. Die Lösung nimmt eine schwache Kopplung benachbarter Umlenkrollen durch das Dichtelement in Kauf. Es zeigt sich, dass die Umlenkrollen sich weiterhin mit einer ausreichend unterschiedlichen Drehzahl drehen können, ohne durch das Sägeseil Schaden zu nehmen. Das Dichtelement ist hingegen nahezu keiner Belastung ausgesetzt, da der Unterschied der Drehzahl benachbarter Umlenkrollen gering ist. Die Drehlager sind durch das aus den Rädern und Dichtelemente gebildete, durchgehende Rohr geschützt.

Vorteilhafterweise ist eine Schnurstärke des Dichtelements größer als ein Unterschied des Radius der äußeren Hülse zu dem Radius der inneren Hülse. Das Dichtelement kontaktiert die beiden benachbarten Umlenkrollen jeweils in radialer Richtung.

Eine Ausgestaltung sieht vor, dass das Drehlager radial innerhalb der inneren Hülse angeordnet ist. Die äußere Hülse kann gegenüber dem Drehlager axial vorstehen. Die innere Hülse kann gegenüber dem Drehlager axial vorstehen.

Eine Ausgestaltung der Umlenkrolle sieht vor, dass die Laufrille eine Symmetrieebene aufweist und ein Schwerpunkt des Drehlagers axial zu der Symmetrieebene versetzt ist.

Ein Umlenkrollenpaket hat wenigstens zwei benachbarte, der oben beschriebenen Umlenkrollen. Die innere Hülse einer der Umlenkrollen taucht in die äußere Hülse der benachbarten Umlenkrolle axial ein. Das Dichtelement der Umlenkrolle liegt radial an der äußeren Hülse an und liegt ebenso radial an der eintauchenden inneren Hülse an.

Eine Ausführungsform des Umlenkrollenpakets ist dadurch gekennzeichnet, dass die äußere Hülse von der eintauchenden inneren Hülse beabstandet ist.

Die Drehlager können Wälzlager, insbesondere Kugellager, Nadellager, oder Wälzlager ohne Laufkörper sein.

Eine Ausführungsform einer Seilsäge mit einem Seilantrieb hat einen Seilspeicher, mit wenigstens einem der oben beschriebenen Umlenkrollenpakete.

Eine schwenkbare Seilumlenkung für ein Sägeseil einer Seilsäge hat eine Umlenkrolle, ein Schwenkgelenk und einen Spann- und Spreizmechanismus. Die Umlenkrolle hat eine Laufrille zum Führen des Sägeseils der Seilsäge. Das Schwenkgelenk hat einen Drehlagerbock mit einer zylindrischen Aufnahme und ein in der zylindrischen Aufnahme drehbar angeordnetes Rohr, wobei die Umlenkrolle an dem einen von Drehlagerbock oder Rohr angebunden ist. Eine Schelle ist an dem Drehlagerbock befestigt und das Rohr umschließend angeordnet. Ein Hebel ist manuell zwischen einer ersten Stellung und einer zweiten Stellung bewegbar.

Der Spann- und Spreizmechanismus verringert ansprechend auf den Hebel in der ersten Stellung einen inneren Umfang der Schelle auf eine erste Umfangslänge und vergrößert in der zweiten Stellung den inneren Umfang der Schelle auf eine zweite Umfangslänge. Die erste Umfangslänge ist geringer als die zweite Umfangslänge und die Schelle liegt mit der ersten Umfangslänge flächig an dem Rohr an.

Eine Seilumlenkung zu fixieren ist typischerweise auch in staubigen Umgebungen durch unterschiedliche Maßnahmen zu realisieren. Das Lösen einer solchen Fixierung benötigt jedoch in der Regel ein Werkzeug, da die Fixierung durch den Eintrag von Staub und Schlamm verklebt ist. Die Seilumlenkung sieht vor, dass die Schelle in der gelösten zweiten Stellung aktiv aufgespreizt wird, indem der Umfang erhöht wird. Der Anwender kann die Kraft zum Aufspreizen über den Hebel einleiten. Der Hebel übt in der ersten Stellung eine Zugkraft zum Verringern des Umfangs der Schelle und in der zweiten Stellung eine Schubkraft zum Vergrößern des Umfangs der Schelle aus.

Eine Ausgestaltung der Seilumlenkung ist, dadurch gekennzeichnet, dass die Schelle ein gegenüber dem Drehlagerbock bewegliches Ende aufweist. Der Spann- und Spreizmechanismus hat eine längs einer Längsachse des Rohrs orientierte Welle mit einer exzentrischen Nocke, ein Drehlager für die Welle und eine die Nocke einschließende Kulisse. Entweder das Drehlager der Welle ist an dem beweglichen Ende der Schelle und die Kulisse an dem Drehlagerbock angebunden oder die Kulisse ist an dem beweglichen Ende und das Drehlager der Welle an dem Drehlagerbock angebunden.

Eine Ausgestaltung der Seilumlenkung ist, dadurch gekennzeichnet, dass der Hebel mit der Welle gekoppelt ist und die Nocke in einer ersten Stellung des Hebels die Kulisse in eine erste Stellung zwingend und die Nocke in einer zweiten Stellung des Hebels die Kulisse in eine zweite Stellung zwingend ist, wobei ein in Umfangsrichtung um das Rohr betrachteter Abstand der Kulisse zu dem Drehlager der Welle in der ersten Stellung verschieden zu der zweiten Stellung ist.

Die Schelle der schwenkbaren Seilumlenkung ist vorzugsweise elastisch verformbar ausgebildet. Die Schelle kann zylindrisch ausgebildet sein.

Eine Ausgestaltung der schwenkbaren Seilumlenkung ist dadurch gekennzeichnet, dass die Schelle durch einen Abschnitt des Drehlagerbocks gebildet ist, wobei der Drehlagerbock in diesem Abschnitt einen Spalt aufweist und dieser Spalt längs einer Längsachse des Rohrs verläuft. Dieser Abschnitt kann von einem benachbarten Abschnitt des Drehlagerbocks durch einen in Umfangsrichtung des Rohrs verlaufenden Schlitz abgegrenzt sein, wobei der Schlitz wenigstens 90 Grad und maximal 270 Grad um das Rohr verläuft.

Vorzugsweise ist eine Längsachse des Rohrs tangential zu der Laufrille der Umlenkrolle angeordnet. Die Seilumlenkung kann einfach um die Längsachse verschwenkt werden, ohne dass eine Höhenanpassung für die Seilführung notwendig wird. Das Rohr ist vorzugsweise hohl, um das Sägeseil durch dieses Rohr zu führen. Eine Achse der Umlenkrolle kann in einer zu der Längsachse des Rohrs senkrechten Ebene liegen.

Die Seilumlenkung kann einen stationären Fuß aufweisen, welcher an dem anderem von Drehlagerbock oder Rohr angebunden ist.

### KURZE BESCHREIBUNG DER FIGUREN

Die nachfolgende Beschreibung erläutert die Erfindung anhand von exemplarischen Ausführungsformen und Figuren. In den Figuren zeigen:
- Fig. 1: eine Seilsäge
- Fig. 2: ein Ausschnitt eines Sägeseils

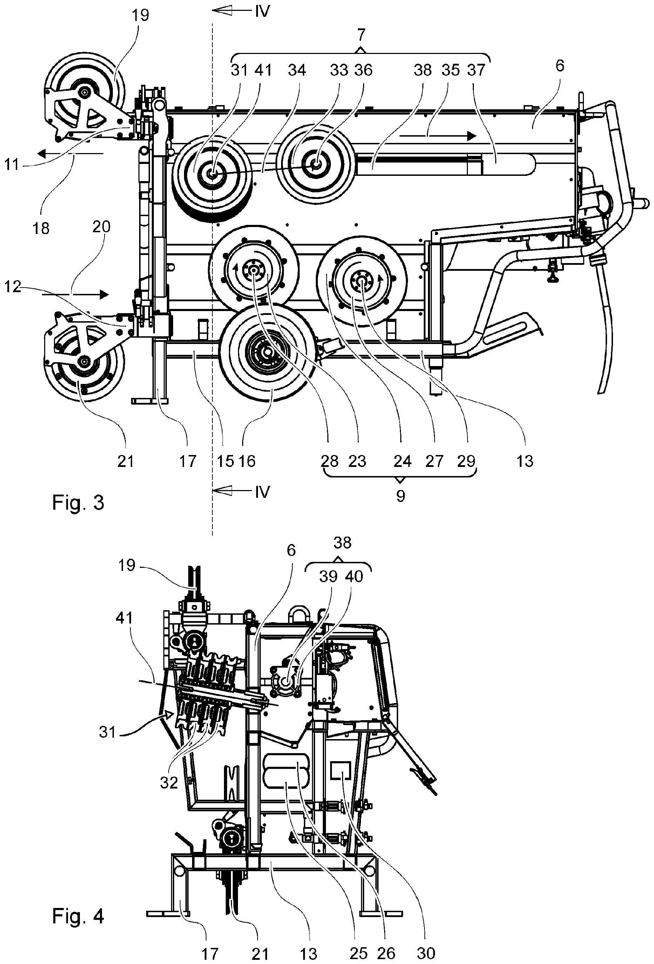

- Fig. 3: die Seilsäge
- Fig. 4: Schnitt in Ebene IV-IV der Seilsäge
- Fig. 5: ein Paket von Umlenkrollen für einen Seilspeicher
- Fig. 6: eine einzelne Umlenkrolle des Pakets
- Fig. 7: eine schwenkbare Umlenkrolle
- Fig. 8: ein Schwenkgelenk der schwenkbaren Umlenkrolle
- Fig. 9: Schnitt durch einen Spann- und Spreizmechanismus in fixierender Stellung
- Fig. 10: Schnitt durch den Spann- und Spreizmechanismus in einer aufgespreizten Stellung

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

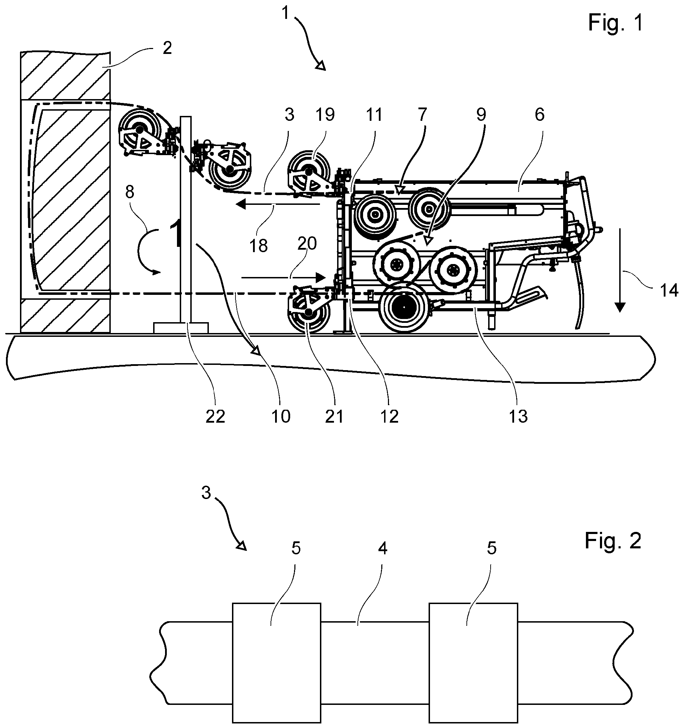

Fig. 1 zeigt einen beispielhaften Aufbau einer Seilsäge 1 in einer Seitenansicht. Die Seilsäge **1** eignet sich beispielsweise zum Trennen von Wänden, Blöcken, Säulen, Gebäuden und anderen großen Bauwerken oder Bauelementen **2** aus Naturstein, Beton, Ziegeln, oder anderen mineralischen Bauwerkstoffen. Die Bauwerkstoffe können auch eine Bewehrung aus Stahl enthalten. Die Seilsäge **1** ermöglicht unterschiedliche Schnittmuster, beispielsweise können Schnittflächen eben, zylindrisch, kegelförmig, prismatisch sein.

Die Seilsäge **1** zerschneidet die Werkstücke **2** mittels eines endlosen, schlaufenförmigen Sägeseils **3.** Das Sägeseil **3** hat ein Trägerseil **4,** dessen Enden miteinander verbunden sind, um eine Schlaufe zu bilden. Das Trägerseil **4** ist flexibel. Das Trägerseil **4** kann beispielsweise auf einem Drahtseil basieren. Entlang des Trägerseil **4** sind auf dessen Umfang mehrere Schneidkörper **5** für mineralische Bauwerkstoffe angeordnet. Die Schneidkörper **5** sind beispielsweise aus gesintertem Hartmetall und/oder mit Diamanten versehen. Die harten Schneidkörper **5** können die mineralischen Bauwerkstoffe und die ggf. vorhandene Armierungseisen schleifen oder schneiden.

Die Seilsäge **1** wird entfernt von dem Bauelement **2** positioniert. Das schlaufenförmige Sägeseil **3** wird um das zu zertrennende Bauelement **2** gelegt und durch ein Gehäuse **6** der Seilsäge **1** geführt. Ein Seilspeicher **7** in dem Gehäuse **6** ermöglicht, die Länge des Sägeseils **3** außerhalb der Seilsäge **1** an das Bauelement **2** und den Abstand zwischen Seilsäge **1** und Bauelement **2** anzupassen. Die Seilsäge **1** treibt das Sägeseil **3** umlaufend an. Eine Umlaufrichtung **8** des Sägeseils **3,** innerhalb und außerhalb der Seilsäge **1,** ist durch einen Seilantrieb **9** in dem Gehäuse **6** der Seilsäge **1** vorgegeben. Der Seilantrieb **9** bewirkt eine Zugspannung auf den rücklaufenden Abschnitt **10** des Sägeseil **3,** d.h. den Abschnitt ausgehend von dem Bauelement **2** zu der Seilsäge **1.** Aus der Zugspannung resultiert eine Anpresskraft des Sägeseils **3** an das Bauelement **2,** welche für das Trennen des Bauelements **2** durch die bewegten Schneidkörper **5** wesentlich ist.

Das Gehäuse **6** der Seilsäge **1** hat einen Seilauslass **11** und einen Seileinlass **12.** Das Sägeseil **3** kann durch den Seilauslass **11** aus dem Gehäuse **6** herausgeführt werden, analog kann das Sägeseil **3** durch den Seileinlass **12** in das Gehäuse **6** hineingeführt werden. Der Seilauslass **11** und der Seileinlass **12** sind vorzugsweise an einer Seite des Gehäuses **6** angeordnet. Vorzugsweise ist der Seileinlass **12** nahe einer Unterseite **13** des Gehäuses **6** ausgeführt. Bei einer ordnungsgemäßen Aufstellung der Seilsäge **1,** d.h. mit der Unterseite **13** in vertikaler Richtung **14** zum Boden weisend, ist der Seileinlass **12** bodennah. Der Vorteil in dieser Anordnung besteht in einem besseren Schutz des Anwenders, falls das unter Spannung stehende rücklaufende Abschnitt **10** des Sägeseils **3** reißt. Das lose Ende des gerissenen Sägeseils **3** bewegt sich bodennah und kann durch das Gehäuse **6** gestoppt werden. Der Seilauslass **11** ist vorzugsweise vertikal beabstandet von dem Seileinlass **12,** d.h. in größerem Abstand von Unterseite **13** als der Seileinlass **12.**

Das Gehäuse **6** kann an der Unterseite **13** ein Fahrgestell **15** aufweisen. Das Fahrgestell **15** hat beispielsweise mehrere Räder **16.** Die Räder **16** können abnehmbar oder blockierbar sein. Das Gehäuse **6** kann an der Unterseite **13** zusätzlich oder anstelle des Fahrgestells **15** ein oder mehrere höhenverstellbare oder ausschwenkbare Füße **17** aufweisen. Das Gehäuse **6** kann geschlossen oder als Rahmen ausgeführt sein. Vorzugsweise sind der Seilantrieb **9** und der Seilspeicher **7** in dem Gehäuse **6** von einer Seite aus zugänglich, damit das Sägeseil **3** eingelegt und um die Rollen des Seilantriebs **9** und des Seilspeichers **7** gewickelt werden kann.

Das Sägeseil **3** tritt in einer durch den Seilauslass **11** vorgegebene (Auslass-) Richtung **18** aus dem Gehäuse **6** aus. Die Auslassrichtung **18** ist beispielsweise senkrecht zu der einer Seite des Gehäuses **6,** z.B. ist die Auslassrichtung **18** parallel zu der horizontalen Ebene, d.h. der Standfläche der Seilsäge **1** bzw. Unterseite **13** des Gehäuses **6.** Vorteilhafterweise ist an dem Gehäuse **6** angrenzend zu dem Seilauslass **11** eine schwenkbare Seilumlenkung **19** vorgesehen. Die Seilumlenkung **19** ermöglicht das Sägeseil **3** in eine beliebige andere Richtung zwängungsfrei umzulenken. Analog tritt das Sägeseil **3** in einer durch den Seileinlass **12** vorgebenen (Einlass-) Richtung **20** in das Gehäuse **6** ein. Die Einlassrichtung **20** ist vorzugsweise antiparallel zu der Auslassrichtung **18.** Eine Seilumlenkung **21** an dem Seileinlass **12** ermöglicht das Sägeseil **3** aus einer beliebigen Richtung zwängfrei in das Gehäuse **6** einzuführen. Außerhalb der Seilsäge **1** angeordnete externe Umlenkeinrichtungen **22** können verwendet werden, um das Sägeseil **3** um Hindernisse zu führen oder gemäß gewünschter Schnittlinien zu führen. Die Umlenkeinrichtungen **22** können bewegt sein, beispielsweise um prismatische oder zylindrische Formen aus einer Wand zu schneiden.

Die Seilsäge **1** hat den Seilantrieb **9** innerhalb des Gehäuses **6.** Der Seilantrieb **9** beinhaltet ein oder mehrere motorgetriebene Antriebsrollen **23, 24.** Die Antriebsrollen **23, 24** sind direkt oder mittelbar über ein Getriebe mit einem oder mehreren Motoren **25** gekoppelt. Die Antriebsrollen **23, 24** werden von den Motoren **25, 26** in einem Drehsinn **27** um ihre Drehachsen **28, 29** angetrieben. Der Drehsinn entspricht der Umlaufrichtung **8** des Sägeseils **3.** Das Sägeseil **3** kann um die Antriebsrollen **23** geschlungen werden. Die Antriebsrollen **23** ziehen das Sägeseil **3** in der von den Antriebsrollen **23** vorgegebene Umlaufrichtung **8.** Der Seilantrieb **9** sorgt für eine Zugkraft auf das Sägeseil **3.** Damit diese Zugkraft sich auf das außerhalb des Gehäuses **6** laufenden Teil möglichst ungehindert überträgt, ist der Seilantrieb **9** vorzugsweise unmittelbar nach dem Seileinlass **12** angeordnet. Eine Seilführung des Sägeseils 3 zwischen dem Seileinlass **12** und dem Seilantrieb **9** ist unveränderlich.

In der dargestellten Ausführungsform ist das Sägeseil **3** geradlinig längs der Einlassrichtung **20** von dem Seileinlass **12** zu dem Seilantrieb **9** geführt. Es sind keine Umlenkrollen oder andere das Sägeseil **3** beeinflussende Elemente zwischen dem Seileinlass **12** und dem Seilantrieb **9** angeordnet. In anderen Ausführungsformen können ein oder mehrere Umlenkrollen zwischen dem Seileinlass **12** und dem Seilantrieb **9** angeordnet sein. Die Umlenkrollen sind frei drehend, d.h. weder angetrieben noch gebremst. Ferner sind die Achsen der Umlenkrollen stationär. Die Länge des Führungswegs zwischen dem Seileinlass **12** und dem Seilantrieb **9** ist unveränderlich konstant.

Der dargestellte Seilantrieb **9** hat eine erste Antriebsrolle **23** und eine zweite Antriebsrolle **24,** welche versetzt zueinander angeordnet sind. Die Achsen **28, 29** der beiden Antriebsrollen **23, 24** sind vorzugsweise zueinander parallel. Die beiden Antriebsrollen **23, 24** können einen gleichgroßen Umfang aufweisen und mit gleicher Drehzahl angetrieben werden. Der Aufbau der Seilsäge **1** ist sehr kompakt, um die Seilsäge **1** gut transportieren zu können. Das Sägeseil **3** wird von der ersten Antriebsrolle **23** unmittelbar zu der zweiten Antriebsrolle **24** geführt. Der Drehsinn der beiden Antriebsrollen **23** ist dafür gegenläufig ausgebildet. Die beiden Antriebsrollen **23** können durch denselben Motor **25** angetrieben werden. Vorzugsweise ist jedoch die erste Antriebsrolle **23** durch einen ersten Motor **25** und die zweite Antriebsrolle **24** durch einen zweiten Motor **26** angetrieben. Die Motoren **25, 26** sind durch eine Motorsteuerung **30** synchronisiert. Die Motorsteuerung **30** kann eine Drehmomentabgabe der beiden Motoren **25, 26** derart steuern, dass das abgegebene Drehmoment über beide Antriebsrollen **23, 24** gleich groß ist. Das Sägeseil **3** wird ohne Schlupf durch die Antriebsrollen **23** bewegt. Die Drehzahl bzw. das Drehmoment wird verringert, falls die Umlaufgeschwindigkeit des Sägeseils **3** geringer als die Umlaufgeschwindigkeit der Antriebsrollen **23** ist, da ansonsten das Sägeseil **3** die Antriebsrollen **23** zerschneidet.

Die Motoren **25** sind vorzugsweise gas- oder benzingetriebene Verbrennungsmotoren, alternativ können auch elektrische, hydraulische oder pneumatische Motoren die Antriebsrollen **23, 24** antreiben.

Die Seilsäge **1** hat einen adaptierbaren Seilspeicher **7.** Der Seilspeicher **7** ist innerhalb des Gehäuses **6** angeordnet. Das Sägeseil **3** wird über den Seilspeicher **7** geführt. Der Seilspeicher **7** ermöglicht den Führungsweg und insbesondere dessen Länge innerhalb des Gehäuses **6** einzustellen. Hierdurch kann die Seillänge der Schlinge **10** außerhalb des Gehäuses **6** angepasst werden. Die Seillänge der Schlinge **10** wird sowohl vor Beginn des Sägens in Abhängigkeit der Aufstellung der Seilsäge **1** und dem Bauelement **2** angepasst. Ferner wird die Seillänge der Schlinge **10** auch an den Fortschritt des Sägens angepasst. Die benötigte Seillänge der Schlinge **10** wird mit zunehmender Schnitttiefe typischerweise kürzer. Der Seilspeicher **7** kompensiert die Veränderung der äußeren Schlinge **10.**

Der Seilspeicher **7** basiert im Wesentlichen auf einem ersten Paket **31** von Umlenkrollen **32** und einem zweiten Paket **33** von Umlenkrollen **32.** Das Sägeseil **3** ist, analog einem Flaschenzug, abwechselnd um eine Umlenkrolle **32** des ersten Pakets **31** und eine Umlenkrolle **32** des zweiten Pakets **33** geführt. Die Seillänge des in dem Seilspeicher **7** aufgewickelten oder "gespeicherten" Sägeseils **3** ist unter anderem von dem Abstand **34** der beiden Pakete **31, 33** abhängig. Der Abstand **34** ist einstellbar. Hierzu ist wenigstens eines der Pakete **31** gegenüber dem anderen Paket **33** in einer Richtung **35** in dem Gehäuse **6** verschiebbar. Eine Achse **36** des verschiebbaren Pakets **33** kann beispielsweise in einer Kulisse **37** parallel zu der horizontalen Ebene geführt sein.

Der Seilspeicher **7** hat eine Vorschubeinrichtung **38,** die eine Vorschubkraft auf das verschiebbare Paket **33** in die den Abstand **34** vergrößernde Richtung **35** ausübt. Die Richtung **35** ist senkrecht zu der Drehachse **36** des verschiebbaren Pakets **33.** Der Anwender kann die Vorschubkraft der Vorschubeinrichtung **38** einstellen. Das verschiebbare Paket **33** verschiebt sich soweit, bis sich ein Gleichgewicht aus den Zugkräften in dem auf dem Seilspeicher **7** aufgewickelten Sägeseil **3** und der den Seilspeicher **7** aufspreizenden Kraft durch die Vorschubeinrichtung **38** einstellt. Der Seilspeicher **7** kürzt somit automatisch die Länge des außerhalb der Seilsäge **1** laufenden Sägeseils **3** entsprechend dem Sägefortschritt. Die Pakete **31, 33** werden soweit auseinander geschoben, bis das Sägeseil **3** straff an dem Bauelement **2** anliegt.

Der Zugkraft der Antriebsrollen **23** wirken die Reibungskräfte des Sägeseils **3** entlang dem Schnitt in dem Bauelement entgegen. Die Spannung und damit die Anpresskraft verringert sich entgegen der Umlaufrichtung **8** des Sägeseils **3.** Das Sägeseil **3** zwischen dem Seilauslass **12** und dem Bauelement ist daher nur geringfügig gespannt. Der Seilspeicher **7** und dessen Vorschubeinrichtung **38** tragen zu der Spannung dieses Abschnitts bei. Die durch den Seilspeicher **7** erhöhte Spannung erhöht die Abbauleistung, da bereits das zulaufende Sägeseil **3** an das Bauelement **2** gepresst wird. Der Seilspeicher **7** ist vorzugsweise in Umlaufrichtung **8** unmittelbar vor dem Seilauslass **12** angeordnet. Insbesondere sind keine angetriebenen oder gebremsten Umlenkrollen zwischen dem Seilspeicher **7** und dem Seilauslass **12** angeordnet, welche die durch den Seilspeicher **7** entgegen der Umlaufrichtung **8** ausgeübte Zugspannung beeinflussen. Vorzugsweise ist das Sägeseil **3** geradlinig von dem bewegten Paket **33** zu dem Seilauslass **12** geführt.

Die Spannung in dem Sägeseil **3** ist von der Reibung und damit von dem Baumaterial abhängig. Da das Baumaterial typischerweise in einem Bauelement **2** inhomogen ist, ergeben sich Schwankungen in den Reibungskräften und daraus resultierend Schwankungen in der Seilspannung. Die Vorschubeinrichtung **38** kann diese Schwankung rasch dämpfen und somit eine Überbelastung des Sägeseils **3** vermeiden. Eine fortlaufende Anpassung der Umlaufgeschwindigkeit des Sägeseils **3** oder des Drucks durch den Anwender ist nicht notwendig.

Die Vorschubeinrichtung **38** beinhaltet vorzugsweise ein federndes Element. Beispielsweise ist die Vorschubeinrichtung **38** eine pneumatische Vorschubeinrichtung **38.** Die pneumatische Vorschubeinrichtung **38** beinhaltet einen pneumatischen Zylinder **39** und einen in dem pneumatischen Zylinder geführten Hubkolben **40.** Der pneumatische Zylinder ist an dem Gehäuse **6** befestigt. Der Hubkolben **40** ist mit dem Paket **33** gekoppelt. Beispielsweise greift der Hubkolben an einem Drehlager des Pakets **33** an. Die Vorschubkraft wird durch den Druck in der pneumatischen Vorschubeinrichtung **38** eingestellt. Anstelle einer pneumatischen Vorschubeinrichtung kann die Vorschubeinrichtung eine mechanische Feder und einen mechanischer Stelltrieb, z.B. mit einer motorgetriebenen Spindel, beinhalten.

Die dargestellte beispielhafte Ausführung hat ein stationäres erstes Paket **31** und ein in der Kulisse **37** bewegliches zweites Paket **33.** Das erste Paket **31** hat eine in dem Gehäuse **6** verankerte Achse **41,** auf welcher die Umlenkrollen **32** aufgesetzt sind. Die Achse **41** ist beispielsweise senkrecht zu der vertikalen Ebene. Die Umlenkrollen **32** sind frei drehend auf der Achse **41** gelagert. Beispielsweise enthalten die Umlenkrollen **32** jeweils ein Wälzlager **42,** um eine möglichst reibungsfreie Drehung der Umlenkrollen **32** zu gewährleisten. Die Umlenkrollen **32** können sich unabhängig voneinander drehen. Insbesondere kann sich die Drehzahl benachbarter Umlenkrollen **32** unterscheiden, z.B. wegen aufgrund von inhomogenen Verschleiß unterschiedlichen Durchmessern. Während des Aufwickelns losen Sägeseils **3** können sich ebenfalls unterschiedliche Drehzahlen von inneren und äußeren Umlenkrollen **32** ergeben. Das Paket **31** kann im Prinzip eine beliebige Anzahl von Umlenkrollen **32** aufweisen. Begrenzt durch das Gehäuse **6** und die notwendige Anpassung des äußeren Teils des Sägeseils **3** während des Sägens weist das Paket **31** typischerweise vier bis acht Umlenkrollen **32** auf. Das zweite Paket **33** hat ebenfalls eine Achse **36,** auf welche die Umlenkrollen **32** reibungsfrei gelagert sind. Eine Anzahl der Umlenkrollen **32** des zweiten Pakets **33** ist gleich der Anzahl der Umlenkrollen **32** des ersten Paket **31.** Die Achse **36** kann parallel zu der ersten Achse **41** angeordnet sein. Vorzugsweise sind die beiden Achsen **41, 36** zueinander geneigt, um das Sägeseil **3** zwängfrei abwechselnd um die Umlenkrollen **32** des ersten Pakets **31** und die Umlenkrollen **32** des zweiten Pakets **33** wickeln zu können. Die relative Neigung ist gering, typischerweise im Bereich zwischen 5 Grad und 20 Grad. Das Sägeseil **3** wird vorzugsweise unmittelbar von einer der Antriebsrollen **23** geradlinig zu einer Umlenkrolle **32** des ersten Pakets **31** geführt. Das Sägeseil **3** verlässt den Seilspeicher **7** von einer der Umlenkrollen **32** des zweiten Pakets **33** geradlinig zu dem Seilauslass **12.** Das erste Paket **31** ist verglichen zu dem zweiten Paket **33** näher an dem Seilauslass **12** angeordnet.

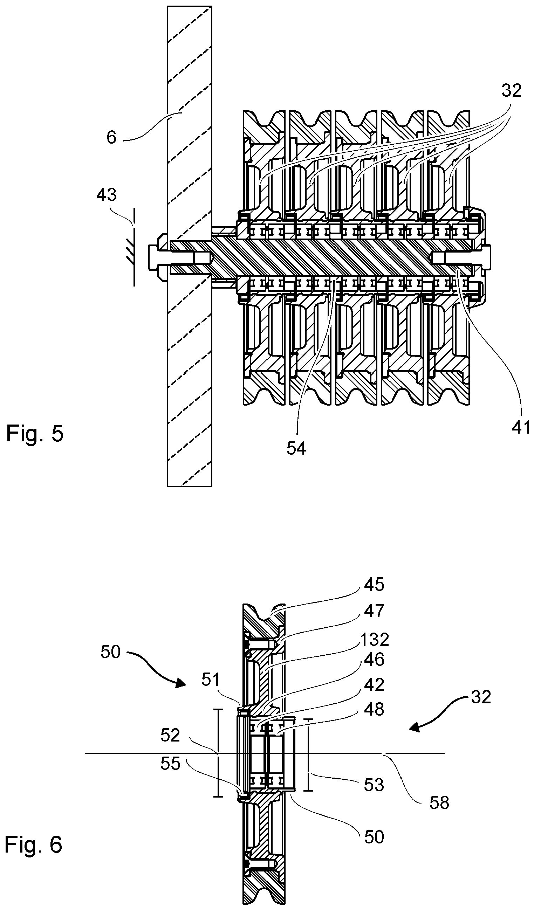

Ein beispielhafter Aufbau eines der Pakete **31** des Seilspeichers **7** ist in Fig. 5 und eine einzelne Umlenkrolle **32** für das Paket **31** ist in Fig. 6 dargestellt. Das beispielhafte Paket **31** hat fünf Umlenkrollen **32,** welche auf der Achse **41** angeordnet sind. Die Achse **41** kann in dem Gehäuse **6** starr befestigt oder drehbar in dem Gehäuse **6** gelagert sein. Eine Ausrichtung der Achse **41** ist senkrecht zu der vertikalen Ebene oder um wenige Grad gegenüber dem Lot auf die vertikalen Ebene verkippt. Die vertikale Ebene **43** ist durch die vertikale Richtung **44** und die horizontale Längsrichtung **18** aufgespannt.

Die Umlenkrollen **32** sind vorzugsweise gleich ausgestaltet. Die Umlenkrollen **32** können einzeln ausgetauscht werden, wenn deren Laufrille **45** verschlissen ist. Die Umlenkrollen **32** basieren auf einem Rad **132.** Das beispielhafte Rad **132** hat eine zentrale Nabe **46,** eine Felge **47** und einen scheibenförmigen Träger, welcher die Felge **47** an der Nabe **46** anbindet. In anderen Ausführungen kann das Rad **132** Speichen oder ähnliches anstelle eines massiven Trägers aufweisen. Das Rad **132** kann aus Stahl, Aluminium oder einem anderen belastbaren Material gefertigt sein. Die Umlenkrolle **32** hat eine Laufrille **45.** Die Laufrille **45** verläuft entlang des gesamten Umfangs des Rades **132.** Das Sägeseil **3** ist der Laufrille **45** geführt. Die Laufrille **45** kann beispielsweise durch einen Ring aus Polymer gebildet sein. Die Laufrille **45** ist auf die Felge **47** des Rades **132** aufgesetzt. Jede der Umlenkrolle **32** ist frei drehend auf der Achse **41** gelagert. Wälzlager **42** sind hierfür in die Nabe **46** des Rades **132** eingesetzt. Ein innerer Ring **48** der Wälzlager **42** sitzt auf der Achse **41.** Die Wälzlager **42** sind beispielsweise Kugellager oder Nadellager. In der beispielhaften Ausführung bilden zwei axial versetzt angeordnete Kugellager das Wälzlager **42.** Die doppelte Anordnung ermöglicht einen kompakten Aufbau und eine hohe Steifigkeit gegen ein Verkippen des Rades **132** gegenüber der Achse **41.** Das Sägeseil **3** wird von der anderen Paket **33** kommend leicht schräg der Laufrille **45** zugeführt. Hierdurch ergibt sich eine resultierende Kraft längs der Achse **41.** Die Wälzlager **42** können hierfür längs der Achse **41** asymmetrisch zu der Laufrille **45** versetzt angeordnet sein. Die zur Achse **41** senkrechte Symmetrieebene der Laufrille **45** und die ebenfalls zur Achse **41** senkrechte Symmetrieebene des Wälzlagers **42** sind zueinander versetzt.

Das Wälzlager **42** muss gegenüber Staub, Schlamm, Wasser, etc. versiegelt sein. Dies ist insbesondere in der rauen Arbeitsumgebung der Seilsäge **1** und dem von dem Sägeseil **3** mittransportieren Staub, Schlamm, Wasser, etc. von hervorgehobener Bedeutung. Ein Verlust des freien Laufs des Umlenkrades erhöht unweigerlich den Verschleiß, insbesondere zerschneidet das Sägeseil **3** in kürzester Zeit eine blockierte Umlenkrolle **32.** Die Umlenkrolle **32** versiegelt jeweils mit der benachbarten Umlenkrolle ihr Wälzlager **42.** Die Umlenkrolle **32** hat an einer Seitenfläche **49** eine axial vorstehende, innere Hülse **50** und an der anderen Seitenfläche **50** eine axial vorstehende, äußere Hülse **51.** Die beiden hohlzylindrischen Hülsen **51, 50** sind koaxial zu der Nabe **46** angeordnet. Ein äußerer Radius **52** der inneren Hülse **50** ist geringer als ein innerer Radius **53** der äußeren Hülse **51.** Die innere Hülse **50** taucht in die äußere Hülse **51** der benachbarten Umlenkrolle **32** ein. Die innere Hülse **50** und die äußere Hülse **51** der benachbarten Umlenkrolle **32** sind zueinander beabstandet. Der axiale Abstand kann beispielsweise mittels einer Abstandsscheibe **54** zwischen den Umlenkrollen **32** eingestellt werden.

Ein Dichtring **55** ist in die äußere Hülse **51** eingesetzt. Der Dichtring **55** hat eine Schnurstärke **56,** welche etwas größer als die Differenz der beiden Radii **52, 53** ist. Der Dichtring **55** dichtet mit der äußeren Hülse **51** und der inneren Hülse **50** der benachbarten Umlenkrolle **32** ab. Der Dichtring **55** berührt vorzugsweise die beiden Hülsen nur in radialer Richtung **14** und ist in axialer Richtung zumindest zu einer der Hülsen beabstandet. Eine Versiegelung durch den radial eingeschlossenen Dichtring **55** erwies sich als zuverlässiger als eine Versiegelung durch einen axial eingeschlossenen Dichtring. Bedingt durch den kontaktierenden Dichtring **55** ergibt sich eine schwache Mitnahme benachbarter Umlenkrollen **32** bei unterschiedlichen Drehzahlen. Da typischerweise die Umlenkrollen **32** näherungsweise die gleiche Drehzahl aufweisen, ist der sich durch die Mitnahme ergebende Verschleiß des Dichtrings **42** tolerierbar.

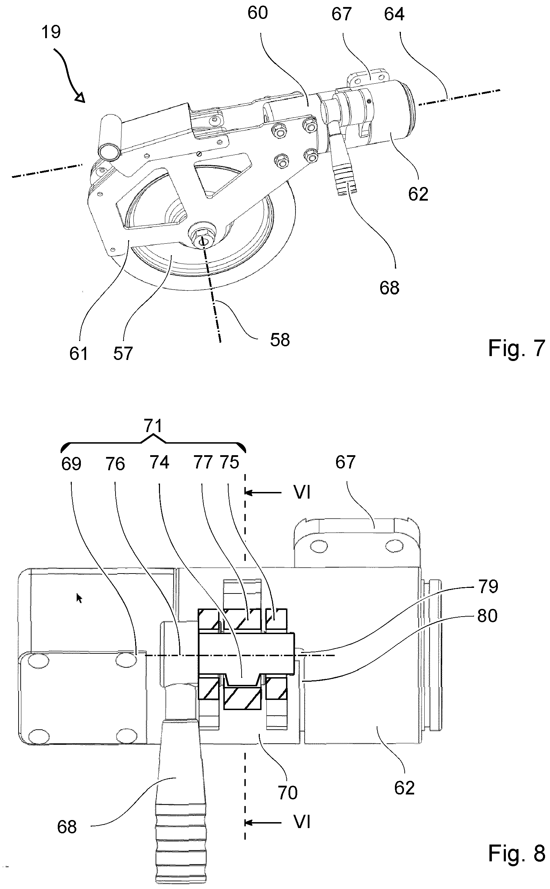

Fig. 7 und Fig. 8 zeigen in größerem Detail die schwenkbare Seilumlenkung **19.** Die Seilumlenkung **19** hat eine Umlenkrolle **57,** über welche das Sägeseil 3 geführt werden kann. Das Sägeseil **3** wird durch die Umlenkrolle **57** in einer Führungsebene geführt. Die schwenkbare Seilumlenkung **19** hat ein Schwenkgelenk **60,** welches ein Einstellen der räumlichen Lage der Führungsebene der Umlenkrolle **57** ermöglicht. Die Ebene kann um einen beliebigen Winkel zu der Auslassrichtung **18** bzw. der Einlassrichtung **20** ausgerichtet werden. Der Anwender kann somit das Sägeseil **3** nach oben, nach unten, nach rechts, nach links oder eine der dazwischen liegenden Richtungen umlenken. Die Seilumlenkung kann auch für die externe Umlenkeinrichtung **22** verwendet werden.

Die Umlenkrolle **57** kann im Wesentlichen analog den zuvor beschriebenen Umlenkrollen **32** aufgebaut sein. Die Umlenkrolle **57** hat ein Rad **132** mit einer umlaufenden Laufrille **45.** Das Sägeseil **3** wird in der Laufrille **45** geführt. Das Rad **132** ist um eine Achse **58** drehbar gelagert. Die Achse **58** und die Laufrille **45** sind zueinander senkrecht. Die Laufrille **45** bzw. die Achse **58** definieren die Führungsebene. Das Rad **132** ist beispielsweise in einem Käfig **61** gelagert.

Das Schwenkgelenk **60** bindet die Umlenkrolle **32** an das Gehäuse **6** an. Das Schwenkgelenk **60** hat einen Drehlagerbock **62** und ein in dem Drehlagerbock **62** gelagertes Rohr **63.** Das Rohr **63** hat eine Längsachse **64,** welche beispielsweise mit der Einlassrichtung **20** bzw. der Auslassrichtung **18** der Seilsäge **1** zusammenfällt. Das Rohr **63** ist um seine Längsachse **64** in dem Drehlagerbock **62** drehbar. Der Drehlagerbock **62** hat eine entsprechende zylindrische Aufnahme **65.** Ein Durchmesser der Aufnahme **65** hat einen Durchmesser, der bis auf ein notwendiges Spiel für die Drehlagerung gleich dem Außendurchmesser des Rohrs **66** entspricht. Der Drehlagerbock **62** hat in der dargestellten Ausführungsform einen Fuß **67,** über welchen der Drehlagerbock **62** an dem Gehäuse **6** der Seilsäge **1** befestigt ist. An dem Rohr **63** ist die Umlenkrolle **57** angebunden, z.B. der Käfig **61** ist an dem Rohr **63** befestigt. In einer anderen Ausgestaltung kann das Rohr **63** an dem Fuß **67** und der Drehlagerbock **62** an der Umlenkrolle **57** angebunden sein.

Der Anwender kann das Schwenkgelenk **60** fixieren. Hierzu ist ein Hebel **68** vorgesehen, welcher in zwei verschiedene Stellungen gebracht werden kann. Der beispielhafte Hebel **68** ist um eine Achse **69** schwenkbar. In der beispielhaften Ausführung kann der Hebel **68** über 180 Grad verschwenkt werden. In einer ersten Stellung, z.B. Null Grad, ist das Rohr **63** in dem Drehlagerbock **62** fixiert. In einer zweiten Stellung, z.B. 90 Grad, ist das Rohr **63** drehbar. Eine dritte Stellung, z.B. 180 Grad, dient zum Lösen des Rohrs **66** falls das Schwenkgelenk **60** verschmutzt ist. Das Fixieren des Rohrs **66** erfolgt über eine Schelle **70.** Die Schelle **70** umschließt das Rohr **63.** Die Schelle **70** ist an dem Drehlagerbock **62** befestigt.

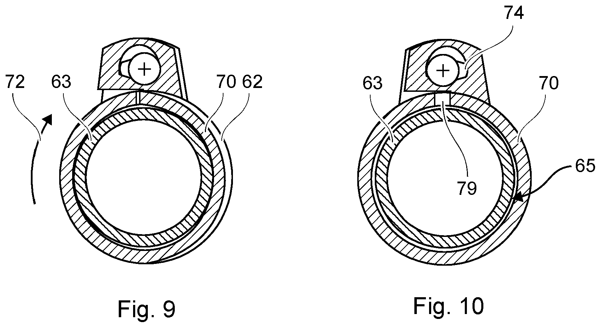

Ein Spann- und Spreizmechanismus **71** verkürzt den Umfang bzw. spreizt den Umfang der Schelle **70.** Der Spann- und Spreizmechanismus **71** kann den inneren Umfang der Schelle **70** soweit verkürzen, dass die Schelle **70** flächig an dem Rohr **63** anliegt. Der Umfang der Schelle **70** ist beim Fixieren näherungsweise gleich dem äußeren Umfang des Rohrs **66.** Der Spann- und Spreizmechanismus kann die Schelle **70** zusätzlich verspannen, um über eine Flächenpressung der Schelle **70** an dem Rohr **63** die Fixierung zu verstärken. Das Rohr **63** ist fixiert. Die fixierende Stellung des Spann- und Spreizmechanismus ist beispielsweise an die erste Stellung des Hebels **68** gekoppelt (Fig. 9). Der Spann- und Spreizmechanismus **71** kann die Fixierung aufheben, indem der Spann- und Spreizmechanismus **71** die Schelle **70** auf einen Umfang aufspreizt, bei welchem die Schelle **70** nur noch locker oder nicht mehr an dem Rohr **63** anliegt. Eine Umfangslänge der Schelle **70** in dieser die Fixierung aufhebenden Stellung ist größer als die Umfangslänge der Schelle **70** in der fixierenden Stellung. Die aufhebende Stellung ist an die zweite Stellung des Hebels **68** gekoppelt. Der Spann- und Spreizmechanismus **71** hat vorteilhafterweise noch eine dritte Stellung, in welcher der innere Umfang zusätzlich vergrößert werden kann (Fig. 10). Typischerweise verklebt das innere Rohr **63** in der Schelle **70** aufgrund von Schlamm und Dreck. Die zusätzliche Aufspreizung unterstützt das Lösen des Rohrs **66** von der Schelle **70.** Der Spann- und Spreizmechanismus **71** übt vorzugsweise sowohl beim Verringern des Umfangs der Schelle **70** eine in Umfangsrichtung **72** wirkende Kraft auf die Schelle **70** aus als auch beim Vergrößern des Umfangs der Schelle **70** eine in Umfangsrichtung **72** wirkende Kraft auf die Schelle **70** aus. Eine einfache Federwirkung der Schelle **70** ist unter den typisch vorherrschenden rauen und dreckigen Bedingungen nicht ausreichend, um die Schelle **70** sicher zu lösen.

Der beispielhafte Spann- und Spreizmechanismus **71** basiert auf einer Nockenwelle, d.h. einer Welle **73,** auf welcher eine exzentrisch angeordnete Nocke **74** angeordnet ist. Die Welle **73** ist in einem Drehlager **75** um eine Wellenachse **76** drehbar gelagert. Der Hebel **68** ist beispielsweise starr mit der Welle **73** verbunden und ermöglicht dem Anwender die Welle **73** zu drehen. Die Wellenachse **76** ist vorzugsweise parallel oder näherungsweise parallel zu der Längsachse **64** des Rohrs **66.** Die Nocke **74** greift in eine Kulisse **77** ein. Ein Drehen der Welle **78** führt zu einem relativen Verschieben der Kulisse **77** gegenüber dem Drehlager **75.** In der dargestellten Ausführungsform ist das Drehlager an dem Drehlagerbock **62** angeordnet, die Kulisse **77** an einem gegenüber dem Drehlagerbock **62** beweglichen Abschnitt der Schelle **70.** Die relative Bewegung von dem Drehlager **75** der Welle **73** gegenüber der Kulisse **77** überträgt sich in ein Bewegen des beweglichen Endes der Schelle **70** gegenüber dem Drehlagerbock **62** in der Umfangsrichtung **72** und somit in ein Verkürzen bzw. Vergrößern des Umfangs der Schelle **70** und deren Umfangslänge.

Die Kulisse **77** kann beispielsweise durch eine in Umfangsrichtung **72** weisende Fläche und eine entgegen der Umfangsrichtung **72** weisende Fläche gebildet sein. Die Nocke **74** liegt in der verkürzenden Stellung an einer der Flächen und in der spreizenden Stellung an der anderen der Flächen an. Ein radialer Abstand **34** der Flächen zu der Wellenachse **76** ist geringer als der radiale Abstand **34** der Nocke **74** von der Wellenachse **76;** d.h. der die Flächen berührende Kontaktfläche der Nocke **74.**

Die beispielhafte Schelle **70** ist als ein Abschnitt des Drehlagerbocks **62** ausgebildet. Der beispielhafte Drehlagerbock **62** ist ebenfalls rohrförmig. Die Schelle **70** ist durch einen längs der Längsachse **64** verlaufenden Spalt **79** gebildet. Der Spann- und Spreizmechanismus **71** schließt bzw. weitet den Spalt **79** in Umfangsrichtung **72.** Vorteilhafterweise trennt die Schelle **70** ein in Umfangsrichtung **72** verlaufender Schlitz **80** von dem anderen Abschnitt des Drehlagerbocks **62.** Hierdurch werden die Kräfte zum Schließen bzw. Weiten des Spalts **79** verringert. Der Schlitz **80** kann beispielsweise mehr als 90 Grad in Umfangsrichtung **72,** beispielsweise weniger als 270 Grad in Umfangsrichtung **72** verlaufen.

Die beispielhafte Schelle **70** ist als ein Abschnitt des Drehlagerbocks **62** ausgebildet. Der beispielhafte Drehlagerbock **62** ist ebenfalls rohrförmig. Die Schelle **70** ist durch einen längs der Längsachse **64** verlaufenden Spalt **79** gebildet. Der Spann- und Spreizmechanismus **71** schließt bzw. weitet den Spalt **79** in Umfangsrichtung **72.** Vorteilhafterweise trennt die Schelle **70** ein in Umfangsrichtung **72** verlaufender Schlitz **80** von dem anderen Abschnitt des Drehlagerbocks **62.** Hierdurch werden die Kräfte zum Schließen bzw. Weiten des Spalts **79** verringert. Der Schlitz **80** kann beispielsweise mehr als 90 Grad in Umfangsrichtung **72,** beispielsweise weniger als 270 Grad in Umfangsrichtung **72** verlaufen.

## Patentansprüche

1. Seilsäge (1) für ein endloses Sägeseil (3) mit:
einem Gehäuse (6),
einem Seilantrieb (9) zum Ziehen des Sägeseils (3) in einer Umlaufrichtung (8),
einem Seilspeicher (7), der ein erstes Paket (31) von Umlenkrollen (32) und ein zweites Paket (33) von Umlenkrollen (32) aufweist, wobei das zweite Paket (33) gegenüber dem ersten Paket (31) zum Erhöhen einer Länge des auf dem Seilspeicher (7) gespeicherten Sägeseils (3) längs einer Richtung (35) verschiebbar gelagert ist,
einer Vorschubeinrichtung (38), die auf das zweite Paket (31) eine Vorschubkraft in die Richtung (35) ausübend ist,
**dadurch gekennzeichnet, dass**
der Seilspeicher (7) in der Umlaufrichtung (8) nach dem Seilantrieb (9) angeordnet ist.

2. Seilsäge (1) nach Anspruch 1, **dadurch gekennzeichnet, dass** die Vorschubeinrichtung (38) pneumatisch ausgebildet ist oder über eine mechanische Feder die Vorschubkraft auf das zweite Paket (31) ausübend ist.

3. Seilsäge (1) nach Anspruch 1 oder 2, **dadurch gekennzeichnet, dass** der Seilantrieb (9) ein oder mehrere Motoren (26) aufweist und die ein oder mehreren Motoren (26) mit ein oder mehreren Antriebsrollen (23) zum Ziehen des Sägeseils (3) in einer Umlaufrichtung (8) gekoppelt sind.

4. Seilsäge (1) nach Anspruch 1 bis 3 **dadurch gekennzeichnet, dass** die Umlenkrollen (32) des Seilspeichers (7) frei laufend sind.

5. Seilsäge (1) nach Anspruch 1 bis 4 **gekennzeichnet durch**
einen an dem Gehäuse (6) vorgesehenen Seilauslass (11) zum Ausgeben des Sägeseils (3), wobei der Seilspeicher (7) zwischen der wenigstens einen Antriebsrolle (23) und dem Seilauslass (11) angeordnet ist.

6. Seilsäge (1) nach Anspruch 5, **dadurch gekennzeichnet, dass** das endlose Sägeseil (3) von dem Seilauslass (11) unmittelbar zu dem Seilantrieb (9) geführt ist.

7. Seilsäge (1) nach Anspruch 6, **dadurch gekennzeichnet, dass** das endlose Sägeseil (3) geradlinig von dem Seilspeicher (7) zu dem Seilauslass (11) geführt ist.

8. Seilsäge (1) nach einem der Ansprüche 1 bis 7, **gekennzeichnet durch** einen an dem Gehäuse (6) vorgesehenen Seileinlass (12) zum Einziehen des Sägeseils (3) in das Gehäuse (6), wobei der Seilantrieb (9) zwischen dem Seileinlass (12) und dem Seilspeicher (7) angeordnet ist.

9. Seilsäge (1) nach Anspruch 8, **dadurch gekennzeichnet, dass** das endlose Sägeseil (3) von dem Seileinlass (12) unmittelbar zu dem Seilantrieb (9) geführt ist.

10. Seilsäge (1) nach Anspruch 9, **dadurch gekennzeichnet, dass** das endlose Sägeseil (3) von dem Seileinlass (12) geradlinig zu dem Seilantrieb (9) geführt ist.

## Claims

1. Wire saw (1) for an endless saw wire (3), comprising:
a housing (6);
a wire drive (9) for pulling the saw wire (3) in a circulating direction (8);
a wire store (7) which has a first package (31) of deflection rollers (32) and a second package (33) of deflection rollers (32), wherein the second package (33) is mounted so as to be displaceable with respect to the first package (31) along a direction (35) in order
to increase a length of the saw wire (3) stored on the wire store (7);
a feed device (38) which exerts a feed force on the second package (31) in the direction (35);
**characterized in that** the wire store (7) is arranged downstream of the wire drive (9) in the circulating direction (8).

2. Wire saw (1) according to Claim 1, **characterized in that** the feed device (38) is pneumatically designed or exerts the feed force on the second package (31) by way of a mechanical spring.

3. Wire saw (1) according to Claim 1 or 2, **characterized in that** the wire drive (9) has one or more motors (26), and the one or more motors (26) are coupled to one or more drive rollers (23) for pulling the saw wire (3) in a circulating direction (8).

4. Wire saw (1) according to Claims 1 to 3, **characterized in that** the deflection rollers (32) of the wire store (7) are free-running.

5. Wire saw (1) according to Claims 1 to 4, **characterized by**
a wire outlet (11) provided on the housing (6) for letting out the saw wire (3), wherein the wire store (7) is arranged between the at least one drive roller (23) and the wire outlet (11).

6. Wire saw (1) according to Claim 5, **characterized in that** the endless saw wire (3) is guided from the wire outlet (11) directly to the wire drive (9).

7. Wire saw (1) according to Claim 6, **characterized in that** the endless saw wire (3) is guided rectilinearly from the wire store (7) to the wire outlet (11).

8. Wire saw (1) according to one of Claims 1 to 7, **characterized by** a wire inlet (12) provided on the housing (6) for pulling the saw wire (3) into the housing (6), wherein the wire drive (9) is arranged between the wire inlet (12) and the wire store (7).

9. Wire saw (1) according to Claim 8, **characterized in that** the endless saw wire (3) is guided from the wire inlet (12) directly to the wire drive (9).

10. Wire saw (1) according to Claim 9, **characterized in that** the endless saw wire (3) is guided from the wire inlet (12) rectilinearly to the wire drive (9).

## Revendications

1. Scie à câble (1) destinée à un câble de sciage sans fin (3), ladite scie à câble comprenant :
un boîtier (6),
un entraînement par câble (9) destiné à tirer le câble de sciage (3) dans un sens de rotation (8),
un magasin de câble (7) qui comporte un premier ensemble (31) de rouleaux de renvoi (32) et un deuxième ensemble (33) de rouleaux de renvoi (32), le deuxième ensemble (33) étant monté de manière coulissante le long d'une direction (35) par rapport au premier ensemble (31) afin d'augmenter la longueur du câble de sciage (3) stocké sur le magasin de câble (7),
un dispositif d'avancement (38) qui exerce sur le deuxième ensemble (31) une force d'avancement dans la direction (35),
**caractérisée en ce que**
le magasin de câble (7) est disposé après l'entraînement de câble (9) dans le sens de rotation (8).

2. Scie à câble (1) selon la revendication 1, **caractérisée en ce que** le dispositif d'avancement (38) est pneumatique ou la force d'avancement est exercée sur le deuxième ensemble (31) par le biais d'un ressort mécanique.

3. Scie à fil (1) selon la revendication 1 ou 2, **caractérisée en ce que** l'entraînement par câble (9) comporte un ou plusieurs moteurs (26) et les un ou plusieurs moteurs (26) sont accouplés à un ou plusieurs rouleaux d'entraînement (23) pour tirer le câble de sciage (3) dans un sens de rotation (8).

4. Scie à câble (1) selon la revendication 1 à 3, **caractérisée en ce que** les rouleaux de déviation (32) du magasin de câble (7) sont à rotation libre.

5. Scie à câble (1) selon la revendication 1 à 4, **caractérisée par** une sortie de câble (11) prévue sur le boîtier (6) afin de délivrer le câble de sciage (3), le magasin de câble (7) étant disposé entre l'au moins un rouleau d'entraînement (23) et la sortie de câble (11).

6. Scie à câble (1) selon la revendication 5, **caractérisée en ce que** le câble de sciage sans fin (3) est guidé depuis la sortie de câble (11) directement vers l'entraînement de câble (9).

7. Scie à câble (1) selon la revendication 6, **caractérisée en ce que** le câble de sciage sans fin (3) est guidé en ligne droite depuis le magasin de câble (7) jusqu'à la sortie de câble (11).

8. Scie à câble (1) selon l'une des revendications 1 à 7, **caractérisée par** une entrée de câble (12) prévue sur le boîtier (6) pour tirer le câble de sciage (3) jusque dans le boîtier (6), le câble d'entraînement (9) étant disposé entre l'entrée de câble (12) et le magasin de câble (7).

9. Scie à câble (1) selon la revendication 8, **caractérisée en ce que** le câble de sciage sans fin (3) est guidé depuis l'entrée de câble (12) directement vers l'entraînement de câble (9).

10. Scie à câble (1) selon la revendication 9, **caractérisée en ce que** le câble de sciage sans fin (3) est guidé directement depuis l'entrée de câble (12) jusqu'à l'entraînement de câble (9).
